# EUROPEAN PATENT APPLICATION

(11) **EP 4 171 112 A1**
(43) Date of publication of application: **26.04.2023**
(21) Application number: 22200913.6
(22) Date of filing: 11.10.2022
(51) Int. Cl.: H04W 28/06, H04W 88/06

(54) **APPARATUS AND METHODS TO PERFORM UPLINK DATA COMPRESSION IN NR**

(30) Priority: 19.10.2021 WO PCT/CN2021/124703; 22.09.2022 CN 202211156611
(71) Applicant: MediaTek Singapore Pte. Ltd., Singapore 138628 (SG)
(72) Inventor: ZHANG, Yuanyuan, Beijing (CN); HSU, Chia-Chun, Hsinchu City (TW)
(74) Representative: Hoefer & Partner Patentanwälte mbB

(57) **Abstract**

Apparatus and methods are provided to support uplink data compression, UDC, in NR protocol stack. In one novel aspect, UDC is performed at the transmitter side at the packet data convergence protocol, PDCP, layer before packets routing and uplink switching. At the receiver side, the receiver performs reordering before decompresses the UDC packets. In one embodiment, transmitting UE (103) is configured with multiple radio access technology, RAT, dual connectivity, MRDC, with a master cell group and a secondary cell group, and wherein the PDCP entity of the UE (103) performs UDC data compression for the MRDC before routing. In another embodiment, the transmitter configures two UDC protocol stacks when a DAPS bearer is configured. The transmitting device generates UDC compressed data packets and performs UDC with the target cell configuration when UL data switching is received from lower layer.

## Description

### TECHNICAL FIELD

The disclosed embodiments relate generally to wireless communication, and, more particularly, to perform uplink data compression in new radio (NR) wireless network.

### BACKGROUND

Mobile data usage has been increasing at an exponential rate in recent year. Due to the steep increase in mobile traffic over the past years, there have been many attempts in finding new communication technologies to further improve the end-user experience and system performance of the mobile networks. The traffic growth has been mainly driven by the explosion in the number of connected devices, which are demanding more and more high-quality content that requires very high throughput rates.

Uplink data compression (UDC) is a method to improve uplink capacity by compressing uplink (UL) data. For UDC, many compression algorithms can be applied. For example, two different UDC compression algorithms are described in RFC1951 DEFLATE and RFC1950 ZLIB. UDC uses dictionary-based compression method. Up to now, UDC is introduced in LTE with limited usage. For example, UDC configuration is not applied to split RBs. However, it has not been supported in new radio (NR) network. In order to further improve the UE experience in NR, a method is desired to integrate UDC in NR with wide range of application, e.g., support of MRDC and split bearers. Considering the processes in NR protocol stack are different from LTE, the methods to support UDC in NR will be different from long term evolution (LTE).

Improvements and enhancements are required for UDC in the NR network.

### SUMMARY

Apparatus and methods are provided to support uplink data compression (UDC) in NR protocol stack and are defined in the independent claims. The dependent claims define preferred embodiments thereof. In one novel aspect, UDC is performed at the transmitter side at the packet data convergence protocol (PDCP) layer before packets routing and uplink switching. At the receiver side, the receiver performs reordering before decompresses the UDC packets. In one embodiment, the transmitter receives uncompressed data packets for an UL transmission with a configured radio bearer in an NR wireless network; generates UDC compressed data packets for the configured radio bearer, and subsequently, routes the UDC compressed data packets to one or more RLC entities of the transmitter. In another embodiment, the receiver receives data packets from UL transmission over a configured radio bearer in an NR wireless network, wherein the data packets are UDC compressed data packets, reorders the received UDC compressed data packets, subsequently, decompresses the UDC compressed data packets, and delivers decompressed data packets to upper layers of the receiver.

Preferably, transmitting UE is configured with multiple radio access technology (RAT) dual connectivity (MRDC) with a master cell group and a secondary cell group, and wherein the PDCP entity of the UE performs UDC data compression for the MRDC before routing. Alternatively or additionally preferably, the transmitter configures two UDC protocol stacks when a DAPS bearer is configured. The transmitting device generates UDC compressed data packets and performs UDC with the target cell configuration when UL data switching is received from lower layer.

This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 is a schematic system diagram illustrating an exemplary NR wireless network for UDC enabled applications in accordance with embodiments of the current invention.
Figure 2 shows simplified block diagrams of the transmitter and the receiver for performing UDC in the NR wireless network in accordance with the current invention.
Figure 3 illustrates an exemplary process flow for a UE to perform UDC for a normal or split bearer in accordance with embodiments of the current invention.
Figure 4 illustrates an exemplary process flow for a BS to perform UL data decompression for a normal or split bearer in accordance with embodiments of the current invention.
Figure 5 illustrates an exemplary process flow for a UE to perform UDC for a DAPS bearer in accordance with embodiments of the current invention.
Figure 6 an exemplary process flow for a BS to perform UL data decompression for a DAPS bearer in accordance with embodiments of the current invention.
Figure 7 illustrates an exemplary flow chart to perform UDC from the transmitter perspective in accordance with embodiments of the current invention.
Figure 8 illustrates an exemplary flow chart to perform UDC from the receiver perspective in accordance with embodiments of the current invention.

### DETAILED DESCRIPTION

Reference will now be made in detail to some embodiments of the invention, examples of which are illustrated in the accompanying drawings.

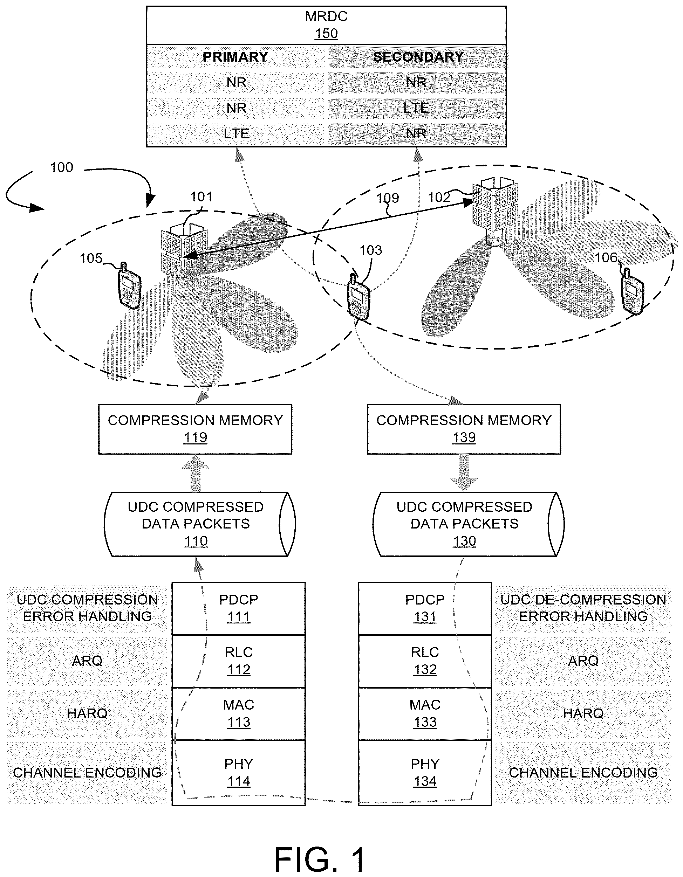

Figure 1 is a schematic system diagram illustrating an exemplary NR wireless network for UDC enabled applications in accordance with embodiments of the current invention. NR wireless network 100 includes one or more fixed base infrastructure units forming a network distributed over a geographical region. The base infrastructure unit may also be referred to as an access point, an access terminal, a base station, a Node-B, an eNode-B, a gNB, or by other terminology used in the art. The network can be homogeneous network or heterogeneous network, which can be deployed with the same frequency or different frequency. gNB 101 and gNB 102 are base stations in the NR network, the serving area of which may or may not overlap with each other. As an example, user equipment (UE) 105 or mobile station 105 is only in the service area of gNB 101 and connected with gNB 101. UE 105 is connected with gNB 101 only. Similarly, UE 106 is only in the service area of gNB 102 and connected with gNB 102. UE 106 is connected with gNB 102 only. gNB 101 is connected with gNB 102 via Xn interface 109. UE 103 is in the overlapping service area of gNB 101 and gNB 102. Preferably, UE 103 is configured with dual protocol stacks and can be connected with gNB 101 and gNB 102 simultaneously. In one novel aspect, the one or more UEs in NR network 100 are configured with UDC to improve uplink capacity by compressing uplink (UL) data. Preferably, UDC uses dictionary-based compression method. The UE transmits UDC compressed data packets over one or more configured radio bearers. The configured radio bearers can be a service radio bearer (SRB), a data radio bearer (DRB), or a split bearer. The gNB received the UDC compressed data packets over the one or more configured radio bearers.

Preferably, multiple radio access technology (RAT) dual connectivity (MRDC) is supported by the UE in the NR wireless network 100. In one example, the MRDC configuration 150 is configured with a primary cell group and a secondary cell group. The primary cell group and the secondary cell group can be configured with either NR or LTE. The MRDC is supported in the NR network, the (primary, secondary) configuration for the exemplary MRDC 150 are (NR, NR), (NR, LTE), and (LTE, NR). Preferably, to facilitate UDC transaction between transmitter and receiver, the following designs are considered: 1) procedure flow for processing compressed and uncompressed packets for both TX and RX; and 2) enable UDC for split bearer.

In one novel aspect, UDC is performed in the NR wireless network. At the transmitter side, e.g., UE 103, the UDC compressor keeps processed uncompressed data in its compression memory 139 and generates UDC compressed data packets 130. At the receiver side, e.g., BS/gNB 101, the UDC decompressor received the UDC compressed data packets 110 from the transmitter and keeps the received UDC compressed data in its own compression memory 119. In an exemplary scenario, UE 103 transmits uplink data to be received by BS/gNB 101. At the TX side, application layer prepares data packets to be transmitted to BS/gNB 102 over lower layers. In PDCP layer 131, data packets are compressed by UDC, and compressed UDC packets 130 are transmitted over radio link control (RLC) layer 132. The transmission mode can be RLC AM or RLC UM. RLC layer packets is further transmitted over MAC layer 133 and PHY layer 134. At the RX side, BS 101 receives the data packets over PHY layer 114, MAC layer 113, RLC layer 112, and PDCP layer 111. BS/gNB 101 decompresses the compressed UDC packets 110 and deliver to higher application layer. Preferably, split bearer is configured for UE 103, which transmits UL data through two RLC bearers in UL. Different protocol layers apply different error handling schemes to ensure proper packet delivery. For example, the PHY layer, such as PHY 114 and PHY 134, applies cyclic redundancy check (CRC) error detection and channel encoding/decoding. The MAC layer, such as MAC 113 and MAC 133, applies hybrid automatic repeat request (HARQ) forward error checking and ARQ error control. The RLC layer, such as RLC 112 and RLC 132, applies ARQ which provides error correction by retransmission in AM. In the PDCP layer, such as PDCP 111 and PDCP 131, if UDC is configured, then UDC layer error handling is applied through UDC checksum to maintain compression memory synchronization between TX and RX.

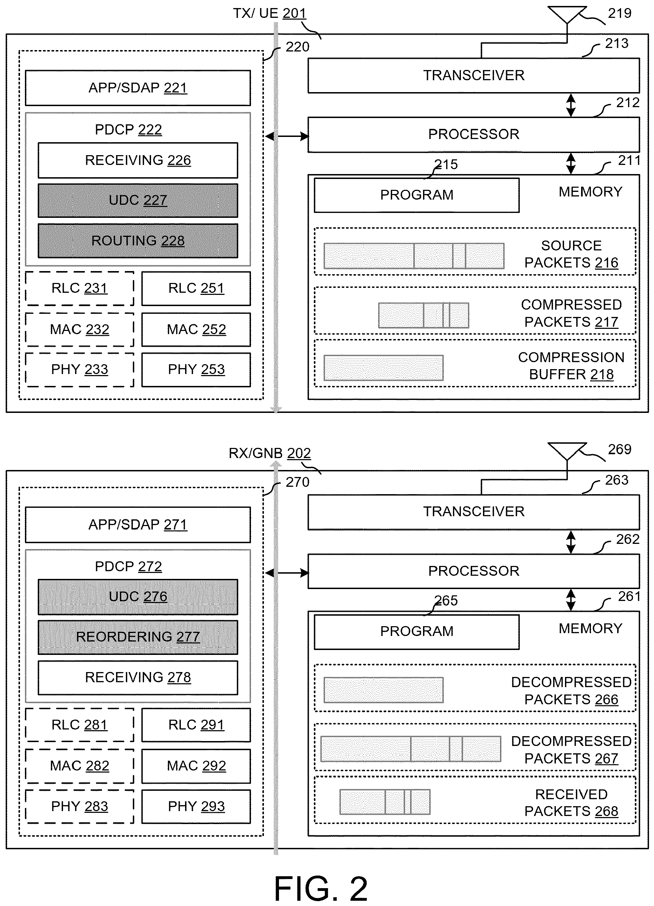

Figure 2 shows simplified block diagrams of the transmitter and the receiver for performing UDC in the NR wireless network in accordance with the current invention. The transmitter 201, such as a UE has radio frequency (RF) transceiver module 213, coupled with antenna 219, receives RF signals from antenna 219, converts them to baseband signals and sends them to processor 212. RF transceiver 213 also converts received baseband signals from the processor 212, converts them to RF signals, and sends out to antenna 219. Processor 212 processes the received baseband signals and invokes different functional modules to perform features in UE/transmitter 201. Memory 211 stores program instructions 215 and data to control the operations of the transmitter/UE 201. The program instructions and data 215, when executed by processor 212, enables the transmitter/UE 201 to carry out embodiments of the current invention. Suitable processors include, by way of example, a special purpose processor, a digital signal processor (DSP), a plurality of microprocessors, one or more microprocessors associated with a DSP core, a controller, a microcontroller, application specific integrated circuits (ASICs), field programmable gate array (FPGAs) circuits, and other type of integrated circuit (IC), and/or state machine.

Transmitter / UE 201 also includes multiple function modules and circuits that carry out different tasks in accordance with embodiments of the current invention. The functional modules and circuits can be implemented and configured by hardware, firmware, software, and any combination thereof. A processor in associated with software may be used to implement and configure features of transmitter/UE 201. Preferably, the functional modules, and circuits 220 comprise an application or service data adaptation protocol (SDAP) module 221, a PDCP layer entity 222 for PDCP layer functionalities including ciphering/deciphering, header compression/decompression, routing and reordering, an RLC layer entity 251, a MAC layer entity 252 with HARQ, and a PHY layer entity 253 supporting CRC and channel encoding/decoding. Preferably, the PDCP entity 222 includes a receiving module 226 that receives uncompressed data packets for an uplink (UL) transmission with a configured radio bearer in a new radio (NR) wireless network; a UDC module 227 that generates compressed data packets for the configured radio bearer; a routing module 228 that routes the UDC compressed data packets to one or more radio link control (RLC) entities of the UE.

In one example, application/SDAP module 221 prepares data packets, received by the PDCP 222, to be compressed by UDC entity 227. The compressed PDCP/UDC packets are subsequently routed through routing module 228 and transmitted over RLC bearer, which are then transmitted over MAC layer and PHY layer. Memory 211 comprises buffer 216 for storing a stream of uncompressed source packets, buffer 217 for storing a stream of UDC compressed packets. In addition, memory 221 comprises a UDC compression memory/buffer 218, which acts as a first in first out (FIFO) buffer. The input data of the UDC compression memory/buffer 218 is the stream of uncompressed packets, which is used for UDC checksum calculation. In one advantageous aspect, each UDC compressed packet is attached with a checksum. A receiver also maintains a UDC compression memory/buffer, which is used for deriving the checksum. The compression memory is synchronized initially between UE 201 and the receiver when UDC is configured. Preferably, UDC is configured for a split bearer, and the PDCP entity 222 is associated with two RLC bearers/entities 251 and 231; two MAC entities 232 and 252; and two PHY entities 233 and 253.

The receiver 202, such as a gNB has radio frequency (RF) transceiver module 263, coupled with antenna 269, receives RF signals from antenna 269, converts them to baseband signals and sends them to processor 262. RF transceiver 263 also converts received baseband signals from the processor 262, converts them to RF signals, and sends out to antenna 269. Processor 262 processes the received baseband signals and invokes different functional modules to perform features in gNB/receiver 202. Memory 261 stores program instructions 265 and data to control the operations of the gNB/receiver 202. The program instructions and data 265, when executed by processor 262, enables the gNB/receiver 202 to carry out embodiments of the current invention. Suitable processors include, by way of example, a special purpose processor, a digital signal processor (DSP), a plurality of microprocessors, one or more microprocessors associated with a DSP core, a controller, a microcontroller, Application specific integrated circuits (ASICs), Field programmable gate array (FPGAs) circuits, and other type of integrated circuit (IC), and/or state machine.

gNB/receiver 202 also includes multiple function modules and circuits that carry out different tasks in accordance with embodiments of the current invention. The functional modules and circuits can be implemented and configured by hardware, firmware, software, and any combination thereof. A processor in associated with software may be used to implement and configure features of gNB/receiver 202. Preferably, the functional modules and circuits 270 comprise an application or service data adaptation protocol (SDAP) module 271, a PDCP layer entity 272 for PDCP layer functionalities including ciphering/deciphering, header compression/decompression, routing and reordering, an RLC layer entity 291, a MAC layer entity 292 with HARQ, and a PHY layer entity 293 supporting CRC and channel encoding/decoding. Preferably, the PDCP entity 272 includes a receiving module 278 that receives data packets from an uplink (UL) transmission over a configured radio bearer in a new radio (NR) wireless network, wherein the data packets are uplink data compression (UDC) compressed data packets; a reordering module 277 that reorders received UDC compressed data packets; a UDC module 276 that decompresses the UDC compressed data packets; and a delivery module that delivers decompressed data packets to upper layers of the gNB.

In one example, PHY 293 received UDC compressed data packets, passes it through MAC 292 and RLC 291. PDCP 272 receives through receiving module 278 and performs reordering first, at reordering module 277. Subsequently, the reordered data packets are decompressed by UDC module 276. The decompressed data packets are delivered to application / SDAP 271. Memory 261 comprises buffer 266 for storing a stream of UDC compressed source packets, buffer 267 for storing a stream of UDC decompressed packets. In addition, memory 261 comprises a UDC compression memory/buffer 268, which acts as a first in first out (FIFO) buffer. The input data of memory/buffer 268 is the stream of decompressed packets, which is used for UDC checksum calculation. In one advantageous aspect, each UDC compressed packet is attached with a checksum. A receiver also maintains a UDC compression memory/buffer, which is used for deriving the checksum. The compression memory is synchronized initially between gNB 202 and the transmitter when UDC is configured. Preferably, UDC is configured for a split bearer, and the PDCP entity 272 is associated with two RLC bearers/entities 291 and 281; two MAC entities 292 and 282; and two PHY 293 and 283.

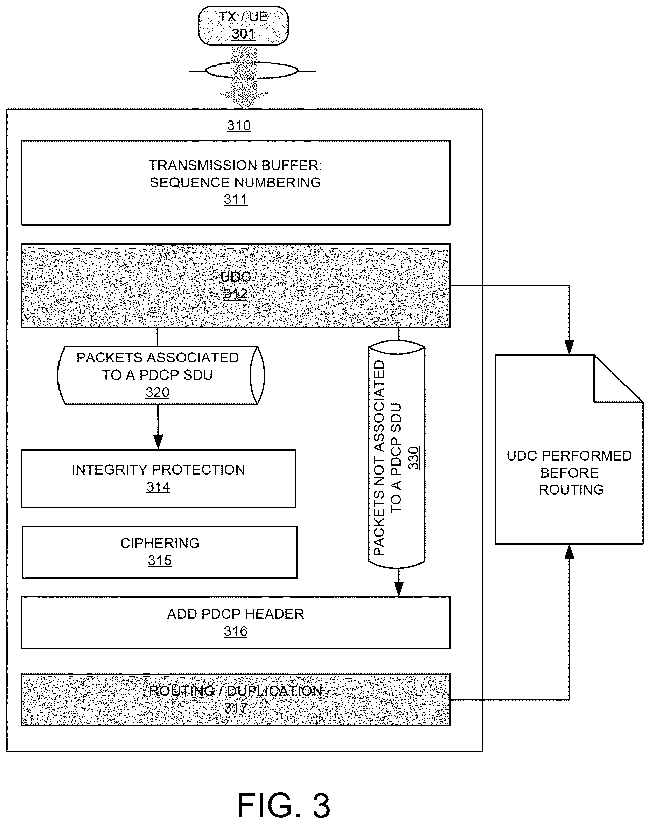

Figure 3 illustrates an exemplary process flow for a UE to perform UDC for a normal or split bearer in accordance with embodiments of the current invention. A normal transmitting PDCP entity 310 of a transmitter/UE 301 receives data from upper layers of the transmitter/UE. At step 311, sequence numbering (SN) is performed. The transmitting PDCP entity associates the COUNT value corresponding to TX_NEXT to this PDCP SDU. At step 312, performs UL data compression of the PDCP SDU using UDC. If the received packets are not associated with a PDCP SDU, at step 330, the data packets are sent to adding PDCP header procedure, otherwise, at step 320, ciphering and security functions are performed before sent to the adding PDCP header procedure. At step 314, integrity protection is performed. At step 315, ciphering is performed. At step 316, PDCP header is added by setting the PDCP sequence number (SN) of the PDCP Data PDU, increment TX_NEXT by one. At step 317, the UDC compressed data are submitted to lower layers. Transmitter/UE performs routing for the resulting PDCP Data PDU to the proper RLC entity when split bearer is configured. Preferably, the UE receives a UDC enabling indicator from the NR wireless network to enable UDC for the configured split bearer. Preferably, the UDC is performed before the routing.

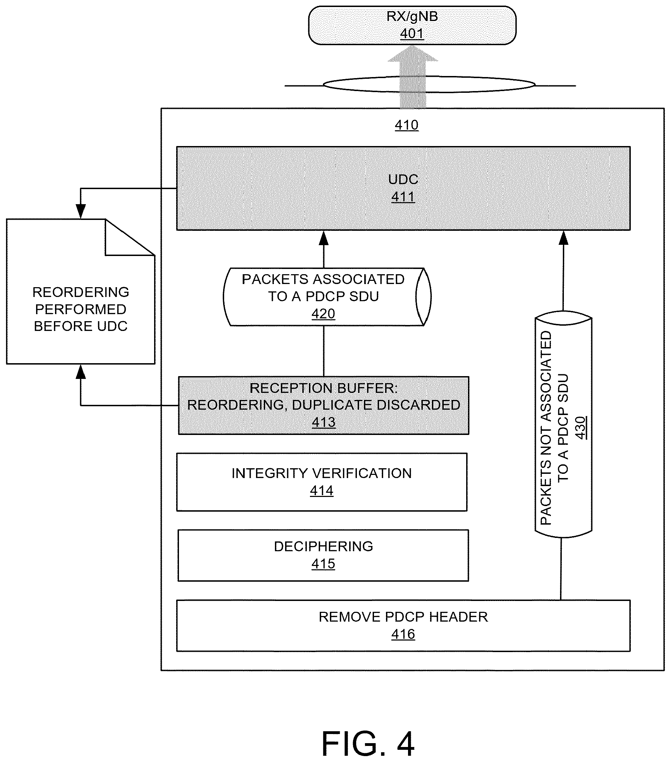

Figure 4 illustrates an exemplary process flow for a BS to perform UL data decompression for a normal or split bearer in accordance with embodiments of the current invention. A normal receiving PDCP entity 410 of a receiver/gNB 401 receives data from lower layers of the receiver/gNB. Then the receiving PDCP entity performs reordering for the stored PDCP SDUs. At step 416, normal receiving PDCP entity 410 receives PDCP Data PDU from lower layers, determines the COUNT value of the received PDCP Data PDU and removes PDCP header. If the received packets are not associated with a PDCP service data unit (SDU), at step 430, the data packets are sent to the UDC 411, the header decompression unit, otherwise, deciphering and security functions are performed before sent to the header decompression at step 420. At step 415, normal receiving PDCP entity 410 performs deciphering using deciphering keys associated with the source cell. At step 414, the normal receiving PDCP entity 410 performs integrity verification with the source security key. At step 413, the receiver/gNB performs reordering for the stored PDCP SDUs. At step 411, it performs UL data decompression when delivering the PDCP SDUs to upper layers. The data are in-order delivered with duplication detection to the application layer of receiver/gNB 401. Preferably, the reordering is performed before the UDC.

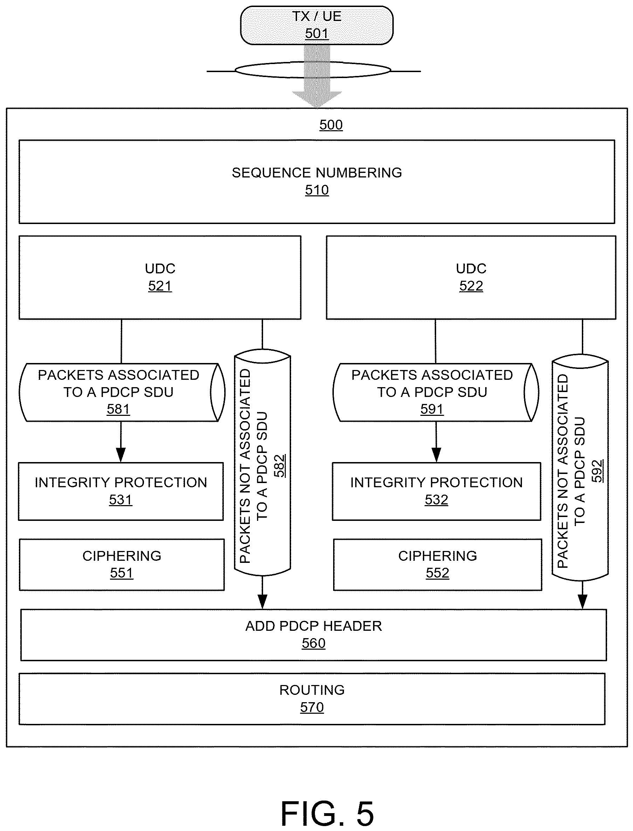

Figure 5 illustrates an exemplary process flow for a UE to perform UDC for a DAPS bearer in accordance with embodiments of the current invention. For DAPS bearers, the PDCP entity is configured with two sets of UDC protocols. When upper layers request uplink data switching, the transmitting PDCP entity shall perform UDC of the PDCP SDU using UDC configuration of the target cell and deliver the resulting PDCP Data PDU to target cell. A DAPS transmitting PDCP entity 500 of the transmitter/UE 501 receives data from upper layers of the transmitter/UE. At step 510, sequence numbering (SN) is performed. At step 521 and step 522, UDC is performed for first data packets and second data packets, respectively. Preferably, the first data packets are source data packets, and the second data packets are target data packets. If the received packets are not associated with a PDCP SDU, at step 582 and 592, the first and the second data packets are sent to adding PDCP header procedure, respectively, otherwise, at step 581 and 591, ciphering and security functions are performed before sent to the adding PDCP header. At step 531, integrity protection is performed for the first/source data packets. At step 532, integrity protection is performed for the second/target data packets. At step 551, ciphering is performed for the first/source data packets. At step 552, ciphering is performed for the second/target data packets. At step 560, PDCP header is added. At step 570, routing is performed.

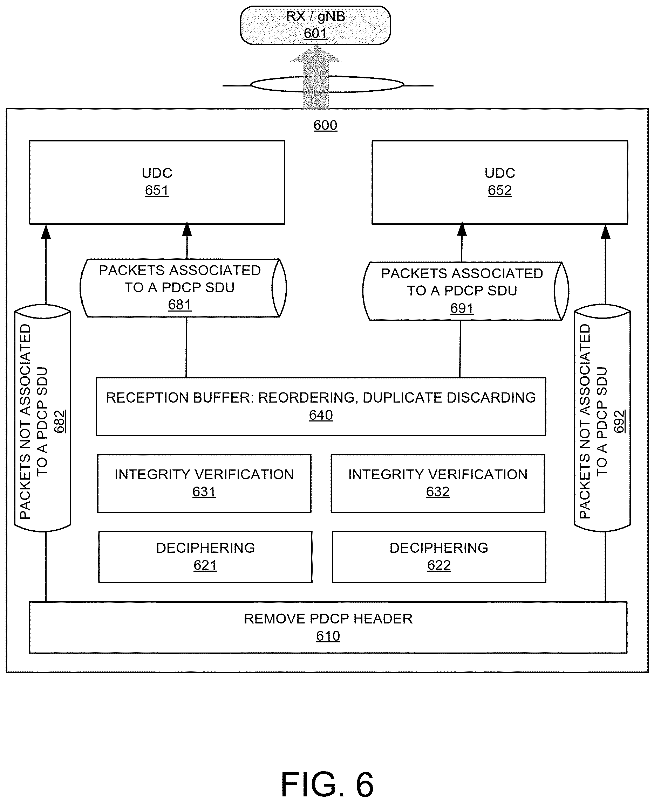

Figure 6 an exemplary process flow for a BS to perform UL data decompression for a DAPS bearer in accordance with embodiments of the current invention. For DAPS bearers, the PDCP entity is configured with two sets of UDC protocols. The receiving PDCP entity performs PDCP reordering before UDC decompression. When upper layers request uplink data switching, the receiving PDCP entity shall perform UDC decompression of the PDCP SDU using UDC configuration of the target cell and deliver the resulting PDCP SDUs to upper layer.

A DAPS receiving PDCP entity 600 of receiver/gNB 601 receives data packets from lower layers of the UE. The data packets come from a first and a second cell. Preferably, the first cell is the source, and the second cell is the target. At step 610, the receiver/gNB receiving PDCP entity removes PDCP header. If the received packets are not associated with a PDCP service data unit (SDU), at step 682 and 692, the first and the second data packets are sent to the UDC 651 and 652, respectively, otherwise, deciphering and security functions are performed before sent to the first/source UDC for the first/source data packets at step 681 or to the second/target UDC for the second/target data packets at step 691. At step 621, deciphering using source deciphering keys associated with the first/source cell is performed for the first/source data packets. At step 622, deciphering using the second/target deciphering keys associated with the second/target cell is performed for the second/target data packets. At step 631, integrity verification with the first/source security key is performed for the first/source data packets. At step 632, integrity verification with the second/target security key is performed for the second/target data packets. At step 640, a reordering is performed, and duplicated packets are discarded. At step 651, the UDC decompression is performed for the first/source packets. At step 652, the UDC decompression is performed for the second/target packets. The data are in-order delivered with duplication detection to the application layer of receiver/gNB 601.

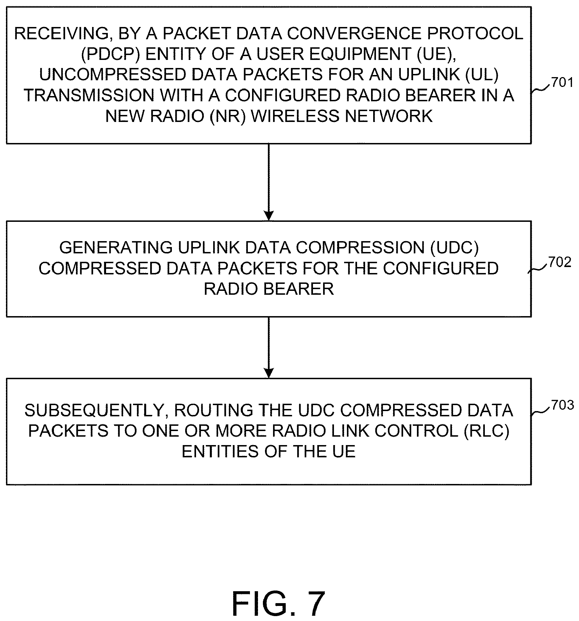

Figure 7 illustrates an exemplary flow chart to perform UDC from the transmitter perspective in accordance with embodiments of the current invention. At step 701, the UE, by a PDCP entity, receives uncompressed data packets for an uplink (UL) transmission with a configured radio bearer in a new radio (NR) wireless network. At step 702, the UE generates uplink data compression (UDC) compressed data packets for the configured radio bearer. At step 703, the UE, subsequently, routes the UDC compressed data packets to one or more radio link control (RLC) entities of the UE.

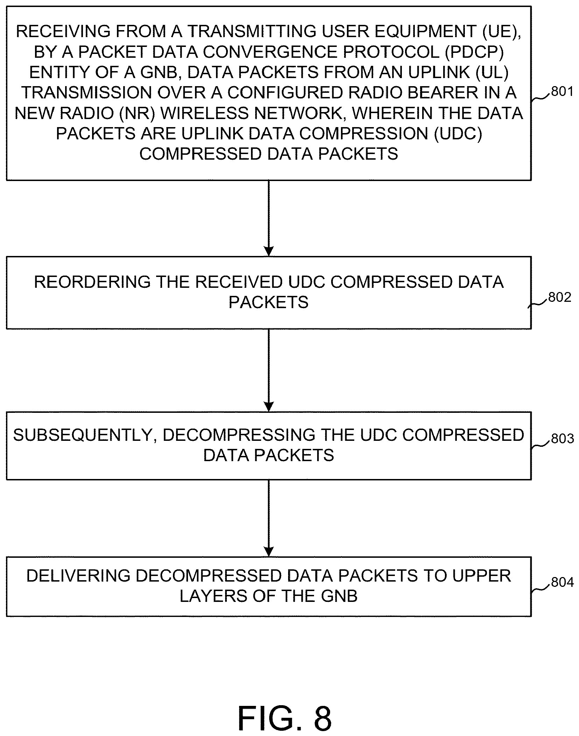

Figure 8 illustrates an exemplary flow chart to perform UDC from the receiver perspective in accordance with embodiments of the current invention. At step 801, the gNB receives from a transmitting UE, by a PDCP entity of the gNB, data packets from an uplink (UL) transmission over a configured radio bearer in a new radio (NR) wireless network, wherein the data packets are uplink data compression (UDC) compressed data packets. At step 802, the gNB reorders the received UDC compressed data packets. At step 803, the gNB, subsequently, decompresses the UDC compressed data packets. At step 804, the gNB delivers decompressed data packets to upper layers of the gNB.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
receiving, by a packet data convergence protocol, in the following also referred to as PDCP, entity of a user equipment, in the following also referred to as UE, uncompressed data packets for an uplink, in the following also referred to as UL, transmission with a configured radio bearer in a new radio, in the following also referred to as NR, wireless network (701);
generating uplink data compression, in the following also referred to as UDC, compressed data packets for the configured radio bearer (702); and
routing the UDC compressed data packets to one or more radio link control, in the following also referred to as RLC; entities of the UE (703).

2. The method of claim 1, wherein the configured radio bear is a service radio bearer, in the following also referred to as SRB, a data radio bearer, in the following also referred to as DRB, or a split bearer.

3. The method of claim 1 or 2, wherein UE is configured with multiple radio access technology, in the following also referred to as RAT, dual connectivity, in the following also referred to as MRDC, with a master cell group and a secondary cell group, and wherein the PDCP entity of the UE performs UDC data compression for the MRDC before routing.

4. The method of any one of claims 1 to 3, wherein the configured radio bearer is a dual active protocol stack, in the following also referred to as DAPS, bearer, and wherein two sets of UDC protocol are created, and each set of UDC protocol is associated with a corresponding RLC entity configured for the DAPS.

5. The method of claim 4, further comprising:
receiving an uplink data switching to a target cell request from upper layers of the UE; and
performing UDC with a UDC configuration corresponding to the target cell.

6. The method of any one of claims 1 to 5, wherein the configured radio bearer is a split bearer, further comprising: receiving a UDC enabling indicator from the NR wireless network to enable UDC for the configured split bearer.

7. A method, comprising:
receiving from a transmitting user equipment, in the following also referred to as UE, by a packet data convergence protocol, in the following also referred to as PDCP, entity of a gNB, data packets from an uplink, in the following also referred to as UL, transmission over a configured radio bearer in a new radio, in the following also referred to as NR, wireless network, wherein the data packets are uplink data compression, in the following also referred to as UDC, compressed data packets (801);
reordering the received UDC compressed data packets (802);
decompressing the UDC compressed data packets (803); and
delivering decompressed data packets to upper layers of the gNB (804).

8. The method of claim 7, wherein the configured radio bear is a service radio bearer, in the following also referred to as SRB, a data radio bearer, in the following also referred to as DRB, or a split bearer.

9. The method of claim 7 or 8, further comprising:
configuring a master cell group and a secondary cell group for the transmitting UE; and
performing reordering by the PDCP entity of the gNB before UDC data decompression.

10. The method of any one of claims 7 to 9, wherein the configured radio bearer is a dual active protocol stack, in the following also referred to as DAPS, bearer, and wherein two sets of UDC protocol are created, and each set of UDC protocol is associated with a corresponding RLC entity configured for the DAPS.

11. The method of any one of claims 7 to 10, wherein the configured radio bearer is a split bearer, further comprising: sending a UDC enabling indicator to the transmitting UE to enable UDC for the configured split bearer.

12. A user equipment (201), in the following also referred to as UE, comprising:
a transceiver (213) that transmits and receives radio frequency, in the following also referred to as RF, signal in a new radio, in the following also referred to as NR, wireless network;
a receiving module (226) of a packet data convergence protocol, in the following also referred to as PDCP, entity (222) that receives uncompressed data packets for an uplink, in the following also referred to as UL, transmission with a configured radio bearer in the NR wireless network;
an uplink data compression, in the following also referred to as UDC, module (227) of the PDCP entity (222) that generates UDC compressed data packets for the configured radio bearer; and
a routing module (228) of the PDCP entity (222) that routes the UDC compressed data packets to one or more radio link control, in the following also referred to as RLC, entities (231, 251) of the UE.

13. The UE (201) of claim 12, wherein UE (201) is configured with multiple radio access technology, in the following also referred to as RAT, dual connectivity, in the following also referred to as MRDC, with a master cell group and a secondary cell group, and wherein the PDCP entity (222) of the UE (201) performs UDC data compression for the MRDC before routing.

14. The UE (201) of claim 12 or 13, wherein the configured radio bearer is a dual active protocol stack, in the following also referred to as DAPS, bearer, and wherein two sets of UDC protocol are created, and each set of UDC protocol is associated with a corresponding RLC entity (231, 251) configured for the DAPS.

15. The UE (201) of any one of claims 12 to 14, wherein the configured radio bearer is a split bearer, and the UE (201) further receives a UDC enabling indicator from the NR wireless network to enable UDC for the configured split bearer.
